# EUROPEAN PATENT SPECIFICATION

(11) **EP 3 287 317 B1**
(45) Date of publication and mention of the grant of the patent: **19.02.2020**
(21) Application number: 16460067.8
(22) Date of filing: 18.09.2016
(51) Int. Cl.: B60P 7/08

(54) **SEMITRAILER SIDE EDGE INCLUDING ELEMENTS ALLOWING FOR CARGO LOCKING**
SATTELAUFLIEGERSEITENKANTE MIT ELEMENTEN ZUR ERMÖGLICHUNG VON FRACHTARRETIERUNG
BORD LATÉRAL DE SEMI-REMORQUE COMPRENANT DES ÉLÉMENTS PERMETTANT LE BLOCAGE DE LA CHARGE

(30) Priority: 16.05.2016 PL 41722116
(43) Date of publication of application: 28.02.2018
(73) Proprietor: "WIELTON" Spolka Akcyjna, 98-300 Wielun (PL)
(72) Inventor: Czarnuch, Arkadiusz, 98-320 Osjaków (PL); Kaczor, Maciej, 98-346 Skomlin (PL)
(74) Representative: AOMB Polska Sp. z.o.o.

(56) References cited:
- EP-A1- 0 670 242
- EP-A2- 2 781 406
- DE-A1- 19 806 448
- US-A- 3 958 516
- US-B1- 6 382 891

## Description

The subject of the invention is a semitrailer side edge with the elements allowing for cargo locking, which is used in semitrailers, particularly in the curtain side semitrailers.

See for example EP 0670242 A1. There are a number of constructions for semitrailer side edges and a number of constructions for the mounting elements which are installed in the semitrailer edges and are intended for protecting the cargoes placed and transported on a semitrailer. The solution titled "Profiled frame section for goods vehicle superstructures, for semitrailers and similar" is known from the description of German invention DE 198 06 448. This solution presents a frame section for the superstructures of commercial vehicles, particularly for semitrailers. It is fitted with the fixing rings, installed in the profiled section of the frame section's loading floor. The fixing rings consist of at least two parallel guides, the crosspiece which locks fixing and at least one bottom lock (shallow bottom lock). The fixing rings can be lowered to the level of loading floor or below it. This solution is characterized of the fact that there are knocked out/pressed/extruded recesses (concavities) in the profiled section of the loading floor, arranged on the entire length of the frame section and there is at least one hole in the recess bottom, through which the fixing ring guides are led and the knocked out/pressed/extruded volume of the recess (concavity) extruded below the loading floor level allows for compatible placing in it the crosspiece (belonging to the fixing ring) which locks the fixing and is lowered to the recess base.

The "Device for attaching a securing element to secure an object on a loading area of a transport vehicle" is known from the European patent EP1972494. This device is fitted with an arc-shaped element, made of metal (e.g. steel) and is inserted through the through holes, which are adapted to the dimensions of the arc-shaped element. The arc-shaped elements are safely secured on the side of a loading area of a transport vehicle, e.g. in a trailer, at a distance from the part of loading area intended for the object which is to be transported. The securing element - e.g. in the form of tape - is placed and/or secured to the sides of a loading area.

The device named the "Device for securing loads at commercial vehicle and container" is known from German patent description DE102011101907. This invention regards a device for securing loads, with rolled or edged profiled element, which has a recess (recess of the wall section in the floor), in which two holes are made. It is also fitted with a ring with two parallel elements, running through the holes to the top (to the upper part of the element) and a counter-element (in the lower part of the element), which are connected to each other respectively above and below the recess (recess of the wall section). The crosspiece connecting the parallel elements above the recess (wall section) encloses the counter-element which connects the parallel elements to each other below the wall section. The ring is regulated/adjustable between the rest position, in which the crosspiece is located in the recess, and the working position, in such a manner that the crosspiece maintains a distance to the recess (wall section). This invention is characterized of the fact that the crosspiece protrudes in such a manner that, at least in the area of the holes for parallel elements, these holes are not entirely covered in the ring rest position.

The purpose of developed invention is to create such a device for fixing the cargoes placed and transported on a semitrailer, which will allow easy and comfortable mounting and securing the semitrailer's (particularly curtain side semitrailer's) cargo, the construction of which will require using the smallest number of elements necessary for its proper functioning, with maintaining or even improving the effectiveness and safety in relation to the solutions known so far.

The essence of the semitrailer side edge with the elements allowing to lock the cargo, placed in the holes made in the longitudinal recess in the semitrailer side edge, is characterized of the fact that it has at least one hole made in the frame section, with the mounting shape placed in it which has and with a through hole made in the central part of the mounting shape. The horizontal locks are lead out from both lower corners of the mounting shape, and the splines, which can be permanently deformed and flattened, are led out from both upper corners.

Preferably, the cross-section of the mounting shape in its central part is smaller than the hole in the frame section.

Preferably, the frame section made in the side edge of a semitrailer has a longitudinal furrow and the cross-section of this furrow - in its central part - resembles the flattened "W" letter", its sharp edges are rounded, and the holes are made on the line of the central ridge of the "W" letter of longitudinal furrow.

Preferably, the holes are arranged at equal intervals.

Preferably, a washer with a central cut-out is placed between the horizontal locks of the mounting shape and the bottom side of the semitrailer floor, and the washer is, preferably, rectangular.

Preferably, the holes are rectangular and their edges or corners are bevelled.

Preferably, the mounting shape has the shape of elongated rectangles in the top and bottom view, and preferably both of them are of different size and the lower one, enclosing the horizontal locks, is bigger.

Preferably, the shape - in the front view - is an element with the rectangular contour as a rule, with the proportions close to square.

Preferably, the edge has the side holes in the frame section, shielded with a seal with protruding wings, which cover the side holes, or plug the side holes.

Preferably, the seal is shaped longitudinally and, by being pressed in, is locked in the longitudinal recess of the frame section, and the recess is, preferably, made below the floor surface.

Preferably, the frame section is shaped below, or above, or partially below a loading area of a vehicle.

The solution according to the invention allows easy and safe fixing and securing the cargo on the semitrailer platform. A special advantage of developed construction is the easiness of fixing the single, individual mounting shapes, wherein the bigger is the number of shapes mounted in the semitrailer's frame section, the safer and more secure they protect the cargo fixed with them. A person using the mounting shapes can freely select the fixing option and can simultaneously use only a part of mounting shapes placed in the semitrailer's frame section, or all of them.

The basic element of developed semitrailer side edge with the elements allowing to lock the cargo is the shape, which does not require screwing additional parts in order to fix it in the frame section, i.e. in the semitrailer side edge. This shape does not require to be fitted with additional elements and it is mounted without using additional parts, by bending out its side splines. The manufacturing of shape can consist in, for instance, cutting it out from a metal sheet with laser, which requires only few seconds. An insulating plate applied under the shape distributes evenly the pressure of working and pulled shape and prevents from deformation and damage of the semitrailer floor.

Grouping the shapes located in a row, close to each other, in the semitrailer's side edge allows fixing the cargo simultaneously at a number of points and ensuring significantly safer stabilization of the cargo, forming the "safety lock" system.

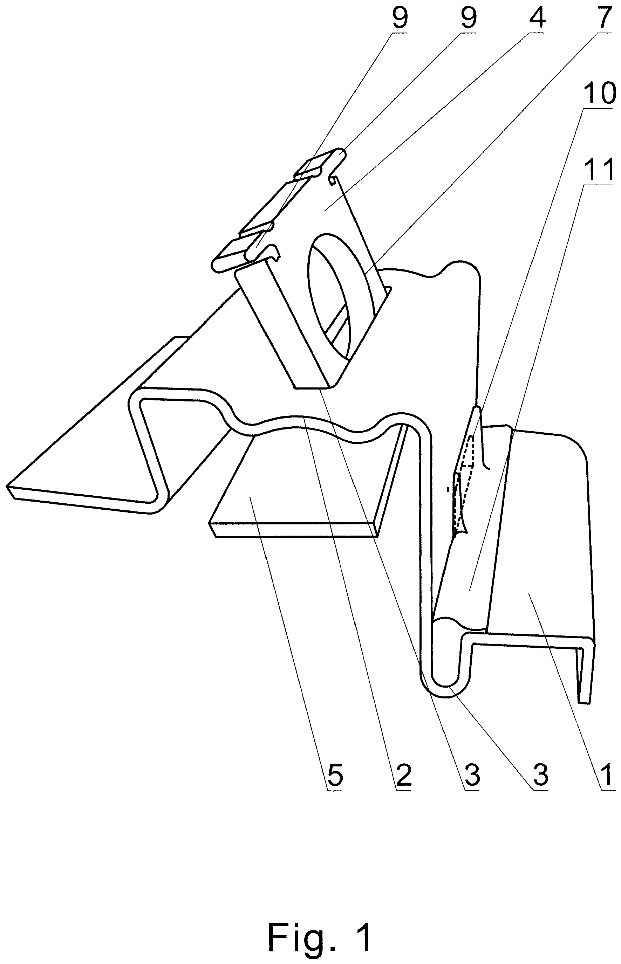

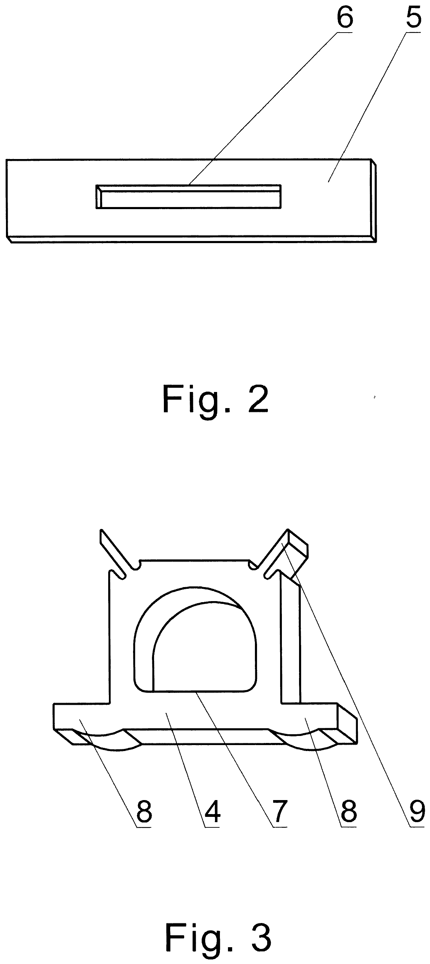

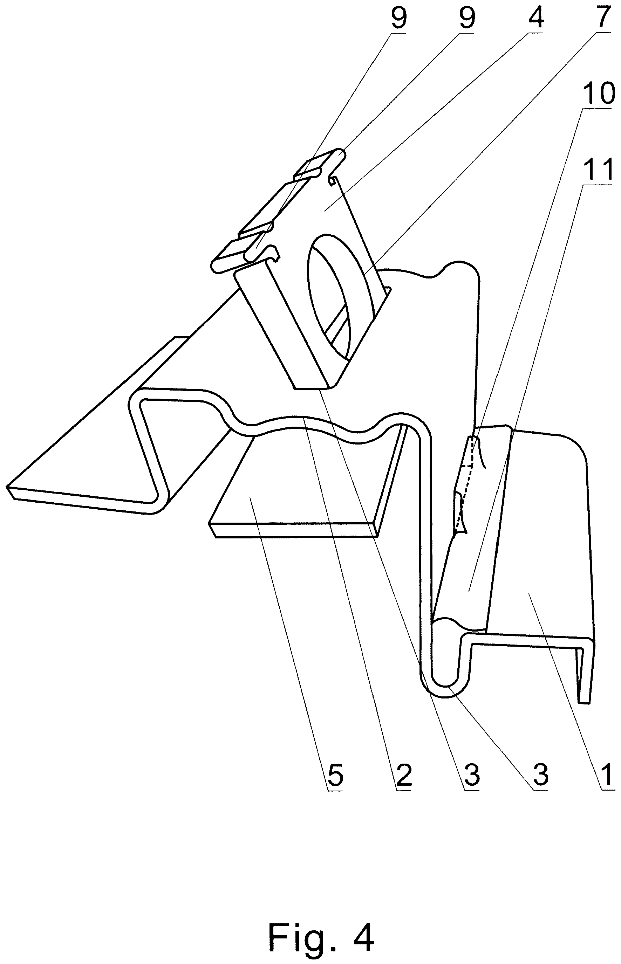

The subject of the invention was presented in more detail in the embodiment shown in figures, where Fig. 1 - presents a perspective view of a cut out fragment of the frame section, i.e. the fragment of semitrailer's edge with a through hole and the mounting shape placed already in it, prepared for threading a hook, rope or tape of cargo locking belts through the through hole and for fixing it in the through hole, wherein the side holes are shielded here with a longitudinal seal, Fig. 2 - presents, in a top view, the flat washer, placed between the bottom part of the edge and the shape, Fig. 3 - presents a perspective view of the shape before its mounting and Fig. 4 - presents a perspective view of a cut out fragment of the frame section with the mounting shape placed already in it, wherein in this figure the seal wings plug the side hole.

As it is shown in the figures, the developed semitrailer's side edge with the elements allowing to lock the cargo is located on both sides of the semitrailer, and it consists of the frame section (1), i.e. the longitudinal part of the body construction, made in semitrailer's floor, frame or integral body, preferably below a loading area of a vehicle. Both frame sections (1) are situated symmetrically on both sides of a semitrailer and they form the edges of semitrailer's frame. The frame section (1) has a longitudinal furrow (2), and the cross-section of the longitudinal furrow (2) - in its central part - resembles the flattened "W" letter, the sharp edges of which were rounded, reinforcing the profile longitudinally.

The holes (3), arranged usually at equal distance, are made in the longitudinal furrow (2), which is also, preferably, shaped below a loading area of a vehicle, most preferably on the line of the central ridge of the "W" letter and the holes (3) are rectangular and their edges and corners are bevelled. Each hole (3) is prepared to place the mounting shape (4) in it, or rather to put the mounting shape (4) through it. In the top and bottom view each mounting shape (4) has, as a rule, the shape of elongated rectangular, with different sizes in both cases, because its lower contour is bigger. The cross-section of the mounting shape (4) - in its central part - is slightly smaller than the hole (3). Prior to inserting the mounting shape (4) into the hole (3), a flat washer (5), which is preferably also rectangular, is put on the shape (4). The flat washer (5) has a central cut-out (6) and the size of this cut-out is adapted to the dimensions of the cross-section of the shape (4) and the cut-out (6) allows inserting the mounting shape (4) into it.

Due to such matching of the elements, easy and also stable putting the flat washer (5) onto the mounting shape (4) is possible.

The flat washer (5) protects the semitrailer's floor, because it prevents from arising the dents, which could be caused by strong pulling of the working shape (4) by the cargo during its transport, in the side edge of a semitrailer, and particularly in the frame section (1). The tension of appropriate belt protecting the cargo (for instance tape or rope) is transferred onto the side edge of a semitrailer and onto the frame section (1) and is distributed evenly by the flat washer (5) on the surface located under it. It prevents the point acting of force, overloading the material of which the described elements are made and indenting the shape (4) into the frame section (1).

The shape (4) - in the front view - is a monolithic element with, as a rule, a rectangular contour, with the proportions close to square. It has a through hole (7) in its central part. The through hole (7) allows fastening the hooks of the fixing tapes, which protect the transported cargo, to the shape (4), and, at the same time, to the side edge of a semitrailer.

The horizontal locks (8) are led out from both lower corners of the shape (4).

Generally, the individual shapes (4) are inserted into the hole (3) in the frame section (1) from the bottom side of semitrailer's floor. After putting the shape (4) through the hole (3) it locks, while its upward movement is continued, on the horizontal locks (8) which protrude outside the contour of the main part of the shape (4) and outside the hole (3). The horizontal locks (8), protruding to the sides, remain always locked under the surface of the frame section (1) along with the flat washer (5), placed on them previously and located between them and the bottom side of the frame section (1).

The splines (9) are led out from both upper corners of the shape (4).

The splines (9) are mechanically bent out and somehow flattened after placing the shape (4) with the flat washer (5) in the hole (3) of the frame section (1). The splines (9) are designed and shaped so as to allow placing the shape (4) in the through hole (3) prior to mounting and their closing. After mechanical deflecting of the splines they do not allow withdrawing the shape (4) from the frame section (1) and their removal is possible only after their repeated deformation, or breaking. The side edge with the elements allowing to lock the cargo designed in such a manner allows safe fixing of cargoes, using the hooks and mounting tapes, which can be fixed not only using the shapes (4) described above, but also in the side holes (10) of the frame section (1), wherein the side holes (10) are shielded with the seal (11), and the protruding wings of the seal cover the side holes (10), or plug the side holes (10) when they are not filled by the hooks placed in them. The seal (11) is shaped longitudinally and locks in the longitudinal recess of the frame section (1) made below the floor surface.

### List of elements:

1. frame section (of semitrailer),
2. furrow (longitudinal),
3. hole (in frame section),
4. shape (mounting, monolithic),
5. washer (flat),
6. cut-out (central),
7. through hole (in shape),
8. horizontal lock,
9. spline,
10. side hole,
11. seal.

## Claims

1. A side edge of a semitrailer with elements allowing to lock cargo, located in holes made in a longitudinal recess in the side edge of the semitrailer which has at least one hole (3) made in a frame section (1) with a monolithic mounting shape (4) placed in it and with a through hole (7) made in the central part of the mounting shape, wherein horizontal locks (8) are led out from both lower corners of the mounting shape and splines (9) are led out from both upper corners, **characterized in that** the splines (9) are permanently deformed and flattened after placing the mounting shape (4) in the hole (3).

2. The side edge of a semitrailer with the elements allowing to lock the cargo, according to the claim 1, **characterized in that** the frame section (1) made in the side edge of a semitrailer has a longitudinal furrow (2) and the cross-section of this furrow (2) - in its central part - resembles the flattened "W" letter", its sharp edges are rounded, and the holes (3) are made on the line of the central ridge of the "W" letter of the longitudinal furrow (2).

3. The side edge of a semitrailer with the elements allowing to lock the cargo, according to one of the claims from 1 or 2, **characterized in that** it has side holes (10) in the frame section (1), shielded with a seal (11) with protruding wings, covering the side holes (10), or plugging the side holes (10).

4. The side edge of a semitrailer with the elements allowing to lock the cargo, according to one of the claims from 1 or 2 or 3, **characterized in that** the seal (11) is shaped longitudinally and, by being pressed in, is locked in the longitudinal recess of the frame section (1), and the recess is, beneficially, made below the floor surface.

## Patentansprüche

1. Eine Seitenkante eines Sattelaufliegers mit Elementen zum Verriegeln der Ladung, die sich in Löchern befinden, die in einer Längsaussparung in der Seitenkante des Aufliegers angebracht sind, die mindestens ein Loch aufweist, das in einem Rahmenabschnitt (1) mit einer monolithischen Befestigungsform, die darin angeordnet ist, und mit einem Durchgangsloch (7), das im zentralen Teil der Befestigungsform angeordnet ist, wobei horizontale Verriegelungen (8) aus beiden unteren Ecken der Montageform herausgeführt werden und Verzahnungen (9) aus beiden oberen Ecken herausgeführt werden, **dadurch gekennzeichnet, dass** die Verzahnungen (9) nach dem Platzieren der Montageform (4) in der Bohrung (3) dauerhaft verformt und abgeflacht werden.

2. Die Seitenkante eines Sattelaufliegers mit den Elementen, die es ermöglichen, die Ladung nach Anspruch 1 zu verriegeln, **dadurch gekennzeichnet, dass** der in der Seitenkante eines Sattelufliegers hergestellte Rahmenabschnitt (1) eine lange Furche (2) aufweist und der Querschnitt dieser Furche (2) - in ihrem mittleren Teil - dem abgeflachten "W"-Buchstaben ähnelt, ihre scharfen Kanten abgerundet sind und die Löcher (3) auf der Linie der Mittelkante des Buchstabens "W" der langen Furche (2) hergestellt sind.

3. Die Seitenkante eines Sattelaufliegers mit den Elementen, die es ermöglichen, die Ladung nach einem der Ansprüche von 1 oder 2 zu verriegeln, **dadurch gekennzeichnet, dass** er Seitenlöcher (10) im Rahmenabschnitt (1) aufweist, die mit einer Dichtung (11) mit vorstehenden Flügeln abgeschirmt sind, die die Seitenlöcher (10) abdecken oder die Seitenlöcher (10) verschließen.

4. Die Seitenkante eines Sattelaufliegers mit den Elementen, die es ermöglichen, die Ladung nach einem der Ansprüche von 1 oder 2 oder 3 zu verriegeln, **dadurch gekennzeichnet, dass** die Dichtung (11) in Längsrichtung geformt und durch Einpressen in der Längsaussparung des Rahmenprofils (1) verriegelt ist und die Aussparung vorteilhaft unterhalb der Bodenfläche ausgebildet ist.

## Revendications

1. Un bord latéral d'une semi-remorque avec des éléments permettant de verrouiller la cargaison, situés dans des trous réalisés dans un évidement longitudinal dans le bord latéral de la semi-remorque qui présente au moins un trou réalisé dans une section de châssis (1) avec une forme de montage monolithique (4) placé à l'intérieur et avec un trou traversant (7) réalisé dans la partie centrale de la forme de montage, dans lequel des verrous horizontaux (8) sont sortis des deux coins inférieurs de la forme de montage et des cannelures (9) sont sorties des deux coins supérieurs, **caractérisé en ce que** les cannelures (9) sont déformées et aplaties en permanence après avoir placé la forme de montage (4) dans le trou (3).

2. Le bord latéral d'une semi-remorque avec les éléments permettant de verrouiller la cargaison, selon la revendication 1, **caractérisé en ce que** la section de châssis (1) réalisée dans le bord latéral d'une semi-remorque a un sillon longitudinal (2) et la section transversale de ce sillon (2) - dans sa partie centrale - ressemble à la lettre « W » aplatie, ses arêtes vives sont arrondies et les trous (3) sont réalisés sur la ligne de la crête centrale de la lettre « W » du sillon longitudinal (2).

3. Le bord latéral d'une semi-remorque avec les éléments permettant de verrouiller la cargaison, selon l'une des revendications 1 ou 2, **caractérisé en ce qu'**il présente des trous latéraux (10) dans la section de châssis (1), protégés par un joint (11) avec des ailes saillantes, recouvrant les trous latéraux (10) ou bouchant les trous latéraux (10).

4. Le bord latéral d'une semi-remorque avec les éléments permettant de verrouiller la cargaison, selon l'une des revendications 1 ou 2 ou 3, **caractérisé en ce que** le joint (11) a une forme longitudinale et, en étant enfoncé, est verrouillé dans l'évidement longitudinal de la section de cadre (1), et l'évidement est avantageusement réalisé sous la surface de plancher.
